# EUROPEAN PATENT APPLICATION

(11) **EP 4 567 623 A1**
(43) Date of publication of application: **11.06.2025**
(21) Application number: 23856311.8
(22) Date of filing: 30.06.2023
(51) Int. Cl.: G06F 16/2453

(54) **SELECTION RATE ESTIMATION METHOD AND APPARATUS**

(30) Priority: 25.08.2022 CN 202211024983
(71) Applicant: Huawei Technologies Co., Ltd., Shenzhen, Guangdong 518129 (CN)
(72) Inventor: ZHOU, Zhaoqi, Shenzhen, Guangdong 518129 (CN); ZHANG, Shujie, Shenzhen, Guangdong 518129 (CN); LIU, Baozhu, Shenzhen, Guangdong 518129 (CN)
(74) Representative: Pfenning, Meinig & Partner mbB
(86) International application number: PCT/CN2023/105172
(87) International publication number: WO 2024/041221

(57) **Abstract**

A selection rate estimation method includes: obtaining a query statement entered by a user, where the query statement includes an equivalent condition; determining whether a selected value of the equivalent condition is a null value or whether a selected value of the equivalent condition falls within a most common value array; and when the selected value of the equivalent condition is not the null value and does not fall within the most common value array, determining a selection rate of the equivalent condition based on statistical information of a histogram in a database. During selection rate estimation, based on the statistical information that is of the histogram and that is pre-generated in the database, a data distribution status is considered, to obtain the selection rate of the equivalent condition in the query statement entered by the user. In other words, an optimizer generates a better execution plan through lightweight calculation, so that performance of the optimizer is ensured, and a calculation amount of the optimizer is also reduced.

## Description

This application claims priority to Chinese Patent Application No. 202211024983.3, filed with the China National Intellectual Property Administration on August 25, 2022 and entitled "SELECTION RATE ESTIMATION METHOD AND ESTIMATION APPARATUS", which is incorporated herein by reference in its entirety.

### TECHNICAL FIELD

The present invention relates to the field of IT technologies, and in particular, to a selection rate estimation method and estimation apparatus.

### BACKGROUND

In a database system, for a given query, an optimizer uses a cost model to estimate costs of different query plans and selects a query plan with a lowest cost. When the optimizer estimates the costs of different query plans, the leading issue in cost estimation is estimation for a selection rate of a query result (namely, selection rate estimation). In the conventional technology, if a uniform assumption is made for all data during selection rate estimation, a calculation amount of the optimizer is small, but accuracy of the selection rate estimation is low. If a frequency of a constant in each query statement is re-estimated during selection rate estimation, a calculation amount of the optimizer is large, and an appropriate query plan cannot be selected in a short time. As a result, query execution efficiency is affected.

### SUMMARY

Embodiments of this application provide a selection rate estimation method and estimation apparatus, a computing device cluster, and a computer storage medium. During selection rate estimation, based on statistical information that is of a histogram and that is pre-generated in a database, a data distribution status is considered, to obtain a selection rate of an equivalent condition in a query statement entered by a user. In other words, an optimizer generates a better execution plan through lightweight calculation, so that performance of the optimizer is ensured, and a calculation amount of the optimizer is also reduced.

According to a first aspect, this application provides a selection rate estimation method. The method includes: obtaining a query statement entered by a user, where the query statement includes an equivalent condition, and a selected value of the equivalent condition is a constant, a variable, or an expression; determining whether the selected value of the equivalent condition is a null value or whether the selected value of the equivalent condition falls within a most common value array; and when the selected value of the equivalent condition is not the null value and does not fall within the most common value array, determining a selection rate of the equivalent condition based on a statistical graph in a database, where the statistical graph is used to describe a data distribution status in a table in the database.

In this solution, the constant is also referred to as a text value or a scalar value, and is a symbol that indicates a specific data value. A format of the constant depends on a data type of the value indicated by the constant. When the selected value of the equivalent condition is the constant, the equivalent condition may be referred to as a constant equivalent condition. For example, if the query statement entered by the user is "select * from t1 where a=150", "150" is a constant in a query condition. After the equivalent condition entered by the user is received, it is first determined whether the selected value of the equivalent condition entered by the user is the null value and whether the selected value falls within the most common value MCV array. If the selected value of the equivalent condition entered by the user neither is the null value nor falls within the MCV, the selection rate of the equivalent condition may be considered to be determined based on statistical information of the statistical graph generated by the database. The selection rate of the equivalent condition entered by the user is determined based on the pre-generated statistical graph. In this way, a data distribution status is considered, and a calculation amount in a process of calculating the equivalent condition entered by the user is also reduced.

In a possible implementation, the method further includes: generating statistical information for the table in the database, where the statistical information includes at least one of the following: a null value proportion, a total quantity of deduplicated distinct values, the most common value array, and a frequency corresponding to the most common value array.

That is, before the selection rate of the equivalent condition entered by the user is determined, the database may further generate the corresponding statistical information for the table in the database by using an ANALYZE operation. In this way, when a selection rate of a constant equivalent query condition entered by the user is subsequently calculated, the statistical information may be directly used for calculation.

In a possible implementation, the statistical graph is a histogram, and the determining a selection rate of the equivalent condition based on a statistical graph in a database includes: if the selected value of the equivalent condition falls within the histogram, determining whether left and right boundaries of a bucket that is of the histogram and within which the selected value falls are the same; and if the left and right boundaries of the bucket are the same, estimating the selection rate of the equivalent condition based on a quantity of buckets with equal boundaries in the histogram; or if the left and right boundaries of the bucket are different, performing interpolation on the histogram to estimate the selection rate of the equivalent condition.

That is, after it is determined that the selected value of the equivalent condition entered by the user falls within the histogram, the left and right boundaries of the bucket within which the selected value of the equivalent condition falls further need to be considered. Then, the selection rate of the equivalent condition is calculated based on the left and right boundaries of the bucket within which the selected value falls, so that accuracy of selection rate estimation can be effectively improved.

In a possible implementation, the method further includes: if the selected value of the equivalent condition does not fall within the histogram, estimating the selection rate of the equivalent condition based on a total quantity of rows of a queried table in the database.

That is, after it is determined that the selected value of the equivalent condition entered by the user does not fall within the histogram, it may be determined that the selected value of the equivalent condition entered by the user is a low-frequency value. In this case, the selection rate of the equivalent condition may be directly estimated based on the quantity of rows of the table that needs to be queried and that is in the query statement entered by the user.

In a possible implementation, the histogram includes any one of the following: an equal-width histogram, an equal-height histogram, and a compressed histogram.

In a possible implementation, the method further includes: generating a query plan for the query statement based on the selection rate of the equivalent condition; and executing the query plan.

That is, after the selection rate of the equivalent condition in the query statement entered by the user is determined, the query plan of the query statement may be directly generated based on the determined selection rate of the equivalent condition. For example, before the query plan is determined, costs of various query plans are estimated, and a query plan with a lowest cost is selected as a finally executed query plan. For example, scanning cost estimation is calculated, and scanning includes index scanning and sequential scanning. For example, when it is determined that the selection rate of the equivalent condition in the query statement entered by the user is low, index scanning instead of sequential scanning may be selected.

According to a second aspect, an embodiment of this application provides a selection rate estimation apparatus. The system includes: a data receiving module, configured to receive a query statement entered by a user, where the query statement includes an equivalent condition, and a selected value of the equivalent condition is a constant, a variable, or an expression; and a query optimization module, configured to: determine whether the selected value of the equivalent condition is a null value or whether the selected value of the equivalent condition falls within a most common value array; and when the selected value of the equivalent condition is not the null value and does not fall within the most common value array, determine a selection rate of the equivalent condition based on a statistical graph in a database, where the statistical graph is used to describe a data distribution status in a table in the database.

In a possible implementation, the query optimization module is further configured to:
generate statistical information for the table in the database, where the statistical information includes at least one of the following: a null value proportion, a total quantity of deduplicated distinct values, the most common value array, a frequency corresponding to the most common value array, and a histogram.

In a possible implementation, the statistical graph is a histogram, and the query optimization module is further configured to:
if the selected value of the equivalent condition falls within the histogram, determine whether left and right boundaries of a bucket that is of the histogram and within which the selected value falls are the same; and
if the left and right boundaries of the bucket are the same, estimate the selection rate of the equivalent condition based on a quantity of buckets with equal boundaries in the histogram; or
if the left and right boundaries of the bucket are different, perform interpolation on the histogram to estimate the selection rate of the equivalent condition.

In a possible implementation, the query optimization module is further configured to:
if the selected value of the equivalent condition does not fall within the histogram, estimate the selection rate of the equivalent condition based on a total quantity of rows of a queried table in the database.

In a possible implementation, the histogram includes any one of the following: an equal-width histogram, an equal-height histogram, and a compressed histogram.

In a possible implementation, the query optimization system further includes a query execution module.

The query optimization module is further configured to generate a query plan for the query statement based on the selection rate of the equivalent condition.

The query execution module is configured to execute the query plan.

In a possible implementation, the query optimization system further includes a query parsing module.

The query parsing module is configured to parse the query statement, where the parsing includes at least one of the following: lexical parsing, syntax parsing, and semantic analysis.

It may be understood that for beneficial effect of the second aspect, refer to the related description in the first aspect. Details are not described herein again.

According to a third aspect, this application provides a computing device cluster. The device cluster includes at least one computing device. Each computing device includes a processor and a memory.

The processor of the at least one computing device is configured to execute instructions stored in the memory of the at least one computing device, to enable the computing device cluster to perform the method according to the first aspect.

According to a fourth aspect, this application provides a computer-readable storage medium, including computer program instructions. When the computer program instructions are executed by a computing device cluster, the computing device cluster performs the method according to the first aspect.

According to a fifth aspect, a computer program product including instructions is provided. When the instructions are run by a computing device cluster, the computing device cluster is enabled to perform the method according to the first aspect.

According to a sixth aspect, this application provides a chip, including at least one processor and an interface.

The at least one processor obtains program instructions or data through the interface.

The at least one processor is configured to execute the program instructions, to implement the method according to the first aspect.

### BRIEF DESCRIPTION OF DRAWINGS

FIG. 1 is a diagram of a system architecture of a cost-based query optimization system according to an embodiment of this application;
FIG. 2 is a schematic flowchart of a selection rate estimation method;
FIG. 3 is a schematic flowchart of another selection rate estimation method;
FIG. 4 is a schematic flowchart of a selection rate estimation method according to an embodiment of this application;
FIG. 5A and FIG. 5B are a schematic flowchart of a selection rate estimation method according to an embodiment of this application;
FIG. 6 is a diagram of a structure of another selection rate estimation apparatus according to an embodiment of this application;
FIG. 7 is a diagram of a structure of a computing device according to an embodiment of this application;
FIG. 8 is a diagram of a structure of a computing device cluster according to an embodiment of this application; and
FIG. 9 is a diagram of a connection manner between computing device clusters according to an embodiment of this application.

### DESCRIPTION OF EMBODIMENTS

To make objectives, technical solutions, and advantages of embodiments of this application clearer, the following describes the technical solutions in embodiments of this application with reference to accompanying drawings.

In descriptions of embodiments of this application, any embodiment or design scheme described as an "example", "for example", or "in an example" should not be understood as being more preferred or having more advantages than another embodiment or design scheme. Specifically, use of the terms such as "example", "for example", or "in an example" is intended to present related concepts in a specific manner.

In addition, the terms "first" and "second" are merely used for a description purpose, and shall not be understood as indicating or implying relative importance or implicitly including indicated technical features. Therefore, a feature limited by "first" or "second" may explicitly or implicitly include one or more features. The terms "include", "comprise", "have", and their variants all mean "include but are not limited to", unless otherwise specifically emphasized in another manner.

Before the solutions of the present invention are described, key terms that need to be used in embodiments of the present invention are first explained.

Base table: The base table, namely, a table (table), is defined as a collection of columns. The table is an object for storing data in a database, is a collection of structured data, and is a basis of an entire database system. The table is a database object that includes all data in the database.

Selection rate: The selection rate is a proportion of a quantity of rows in a final query result to a total quantity of rows in a base table in a database.

Index: The index is an ordered data structure in a database management system to assist in quickly querying and updating data in a database table.

NULL value: The null value is a special mark used in a structured query language, is an identifier for unknown or missing data attributes, and indicates an uncertain value in a database. The null value is introduced by E.F. Codd, namely, the creator of relational database models. An SQL null value is used to meet a requirement of a real relational database management system (relational database management system, RDBMS) for supporting "missing information and inapplicable information".

Distinct value: The distinct value is a unique different value, namely, a deduplicated value.

Histogram: The histogram, namely, an equal-frequency (equal-height) histogram, is a type of statistical information commonly used in a database. Through sampling, values in corresponding rows of a table are divided into several buckets of the histogram. Sums of frequencies of values in the buckets of the histogram are the same.

Most common value (most common value, MCV) array: The most common value array is a type of statistical information commonly used in a database. A value in the MCV appears frequently in a corresponding row of a table. Correspondingly, an estimated value of an occurrence frequency of each value in the MCV is further recorded.

Cost model: The cost model is a mathematical model that quantifies a cost of each operation in an execution plan in a database. In a cost-based optimizer, a cost model is used to estimate costs of different operations. In addition, based on this, an execution plan with highest estimated efficiency is selected, so that the execution plan is delivered to an executor for specific execution.

The following describes the technical solutions in this application.

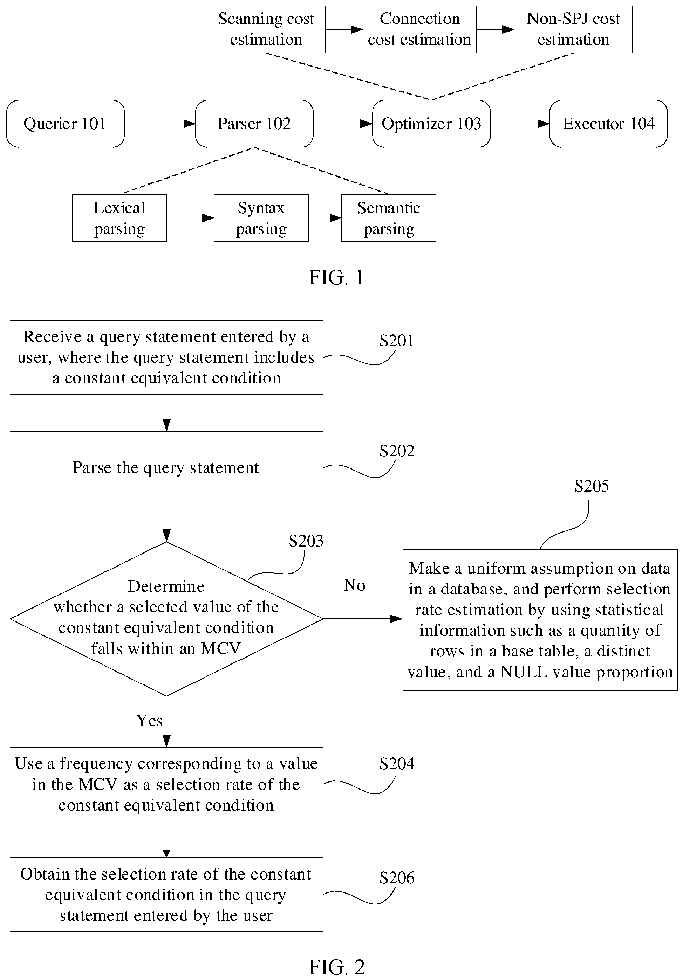

For example, FIG. 1 is a diagram of a system architecture of a cost-based query optimization (cost-based optimization, CBO) system. As shown in FIG. 1, the query system includes a querier 101, a parser 102, an optimizer 103, and an executor 104.

The querier 101 is configured to receive a query statement entered by a user. The query statement entered by the user includes an equivalent condition, and a selected value of the equivalent condition may be a constant, a variable, or an expression. When the selected value of the equivalent condition is the constant, the equivalent condition may be referred to as a constant equivalent condition. When the selected value of the equivalent condition is the variable, the equivalent condition may be referred to as a variable equivalent condition. When the selected value of the equivalent condition is the expression, the equivalent condition may be referred to as an expression equivalent condition. In this embodiment of this application, a selection rate of the equivalent condition may be calculated for the constant equivalent condition, the variable equivalent condition, or the expression equivalent condition. In this embodiment of this application, the constant equivalent condition is used as an example for description.

The parser 102 is configured to perform lexical parsing, syntax parsing, and semantic analysis on the query statement entered by the user, to extract constant information in a query, and transfer the obtained constant information to the optimizer 103.

The optimizer 103 performs cost estimation on the transferred constant information. An estimation process includes several phases: scanning cost estimation, connection cost estimation, non-SPJ estimation, and the like, and finally an execution plan is determined. There is a dependency relationship between phases of the optimizer. However, for a simple query, a part of the process may be omitted. For example, only scanning standby estimation and non-SPJ estimation are performed.

The executor 104 actually executes the execution plan selected by the optimizer to obtain a final query result, and returns the final query result to the user.

After the user enters the query statement into a database, the query statement is entered into the optimizer 103 after lexical parsing, syntax parsing, semantic analysis, and another process is performed on the query statement by the parser. The optimizer 103 estimates costs of different query plans by using a cost model, selects a query plan with a lowest cost, and inputs the query plan to the executor 104. Finally, the executor 104 performs final execution of the query based on the query plan, and an obtained query structure is returned to a user interface. When the optimizer 103 estimates the costs of the different query plans by using the cost model, whether selection rate estimation is accurate directly affects accuracy of cost estimation of a corresponding solution.

Based on the query optimization system shown in FIG. 1, FIG. 2 is a schematic flowchart of a selection rate estimation method. Refer to FIG. 2. The method includes steps S201 to S206.

S201: A querier receives a query statement entered by a user, where the query statement includes a constant equivalent condition. The constant equivalent condition means that a selected value of an equivalent condition is a constant.

In this embodiment, when data in a database is queried, a structured query language (structured query language, SQL) may be used for query. Specifically, when the SQL is used to query the data in the database, a select clause may be used for query. A select statement is used to specify column information in a queried table. A syntax of the select clause is as follows: select column name 1, column name 2...from table name [where substatement]. The where substatement is used for condition filtering. When the where substatement is used for condition filtering, the equivalent condition, a non-equivalent condition, and a fuzzy query are included. The equivalent condition is used for exact search/equivalent search (where column name=value). For example, select id, name from table where name='XX' is used to query information about a person whose name is XX. The non-equivalent condition uses "between...and..." to indicate a range, including a boundary. The fuzzy query is implemented by using like (like). For example, select id, name from table where name like 'X%' is used to query information about all persons whose surnames are X. When like is used to perform fuzzy query, a wildcard character is required. For example, "_" indicates any character, and "%" indicates any quantity of any characters.

The constant is also referred to as a text value or a scalar value, and is a symbol that indicates a specific data value. A format of the constant depends on a data type of the value indicated by the constant. For example, if the query statement entered by the user is "select * from t1 where a=150", "150" is a constant in a query condition.

**In** some embodiments, when receiving the query statement entered by the user, the querier may receive, by using an input interface of the querier (or a query optimization system), the query statement entered by the user.

S202: A parser parses the query statement, to obtain the selected value of the constant equivalent condition.

**In** this embodiment, the parser parses the query statement, and inputs parsed semantic information into an optimizer. When parsing the query statement, the parser performs lexical parsing, syntax parsing, semantic analysis, and another process on the query statement.

S203: The optimizer determines whether the selected value of the constant equivalent condition falls within an MCV, and performs S204 when the selected value of the constant equivalent condition falls within the MCV, or performs S205 when the selected value of the constant equivalent condition does not fall within the MCV.

**In** this embodiment, the database may preprocess the data stored in the database. That is, statistics collection is performed on data in a table stored in the database, to obtain statistical information of each table. **In** some examples, the statistical information of each table includes a proportion of a NULL value in the table, a total quantity of distincts, a value in the MCV, and a frequency corresponding to the value in the MCV. The database performs statistics collection on the data in the table in the database in advance. Therefore, after the optimizer obtains the selected value of the constant equivalent condition, the optimizer first compares the selected value of the constant equivalent condition with the value in the MCV in the statistical information, to determine whether the selected value of the constant equivalent condition falls within the MCV.

S204: The optimizer uses the frequency corresponding to the value in the MCV as a selection rate of the constant equivalent condition.

In this embodiment, when the constant in the query condition falls within the MCV, the pre-collected frequency of the value in the MCV may be directly used as the selection rate of the constant equivalent condition.

S205: The optimizer makes a uniform assumption on the data in the database, and performs selection rate estimation by using statistical information such as a quantity of rows in the base table, a distinct value, and a NULL value proportion.

In this embodiment, the uniform assumption means that it is assumed that occurrence probabilities of all the data in the database are the same. When it is assumed that the occurrence probabilities of all the data in the database are the same, a selection rate of the constant equivalent condition in the query statement may be determined based on the statistical information such as the quantity of rows in the base table, the distinct value, and the NULL value in the base table of the database.

S206: The optimizer obtains the selection rate of the constant equivalent condition in the query statement entered by the user.

In this embodiment, for the selection rate estimation method shown in FIG. 2, in the steps shown in FIG. 2, S203 and S204 are optional steps. That is, after the parser parses the query statement, to obtain the constant equivalent condition, the optimizer may directly make a uniform assumption on the data in the database, and perform selection rate estimation by using the statistical information such as the quantity of rows in the base table, the distinct value, and the NULL value proportion, to obtain the selection rate of the constant equivalent condition in the query statement. For example, it is determined whether the selected value of the constant equivalent condition is a NULL value. When the selected value of the constant equivalent condition is the NULL value, the NULL value proportion in the statistical information can be directly used as the selection rate of the constant equivalent condition.

In the solution shown in FIG. 1, the optimizer makes a uniform assumption on all data outside an MCV or more directly on all data in the database. When the selection rate of the constant equivalent condition in the query statement is calculated based on the assumption that the data is uniform, a data distribution status is not fully considered. As a result, accuracy of selection rate estimation of the constant equivalent condition is low, and the optimizer cannot select an execution plan with higher efficiency, affecting query performance.

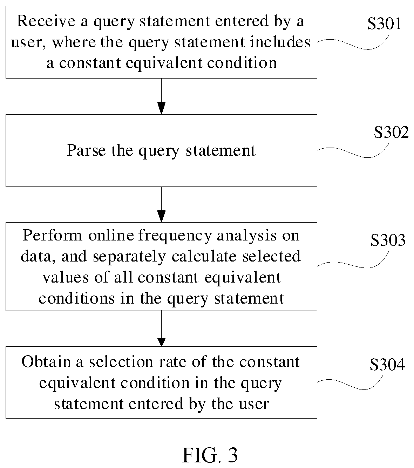

Based on the query system shown in FIG. 1, FIG. 3 is a schematic flowchart of another selection rate estimation method. Refer to FIG. 3. The method includes S301 to S304. For S301 and S302 in FIG. 3, refer to S201 and S202 in FIG. 2. Details are not described herein again.

S301: Receive a query statement entered by a user, where the query statement includes a constant equivalent condition.

S302: Parse the query statement.

S303: Perform online frequency analysis on data, and separately calculate selected values of all constant equivalent conditions in the query statement.

In this embodiment, performing online frequency analysis on the data means that frequency statistics collection is not performed on the data in a database in advance, and after a constant equivalent condition that needs to be queried is determined, frequency analysis is performed on the data in the database based on a selected value of the constant equivalent condition. That is, when a selection rate in the constant equivalent condition is determined, all data in a queried table in the database needs to be traversed. For example, the query statement entered by the user is "select * from t1 where a=150", and a table t1 includes 10,000 pieces of data. In this case, when determining a selection rate of "a=150", an optimizer needs to traverse the 10,000 pieces of data in the table t1, to determine a quantity of occurrences of "a=150" in the 10,000 pieces of data.

S304: Obtain the selection rate of the constant equivalent condition in the query statement.

In the solution shown in FIG. 3, when performing selection rate estimation on the constant equivalent condition in the query statement, the optimizer does not use any pre-stored statistical information, but performs online frequency analysis. Consequently, a calculation amount of the optimizer is large. Further, performance of estimating the constant selection rate is low, and the optimizer cannot determine a query plan in a short time. Consequently, overall query efficiency is affected.

When the optimizer estimates costs of different query plans by using a cost model, whether selection rate estimation is accurate directly affects accuracy of cost estimation of a corresponding solution, and therefore substantially affects quality of the query optimizer. However, during selection rate estimation, if uniform assumptions are made for all data in all databases, a calculation amount of the optimizer may be small, but accuracy of selection rate estimation is low. If a frequency of each constant transferred to the optimizer is re-estimated, a calculation amount of the optimizer is large, and a query plan cannot be selected in a short time. As a result, query execution efficiency is affected. Therefore, in a data query process, a solution in which a data distribution status is not considered cannot ensure accuracy of selection rate estimation, and a solution in which a data distribution status is considered causes an increase in a calculation amount of the optimizer, increases load of the optimizer, reduces performance of the optimizer, and further affects an overall performance of database query.

In view of this, an embodiment of the present invention further provides a selection rate estimation method. After a query statement entered by a user is obtained, it is first determined whether a selected value of an equivalent condition in the query statement is a null value or whether a selected value of an equivalent condition falls within a most common value array. When the selected value of the equivalent condition is not the null value and does not fall within the most common value array, a selection rate of the equivalent condition is determined based on a statistical graph in a database. In this method, a data distribution status in the database is considered, and a calculation amount of an optimizer can also be reduced as much as possible, thereby ensuring performance of the optimizer.

It may be understood that the statistical graph in this embodiment of the present invention is used to describe a data distribution status in a table in the database, and may be a statistical graph that can describe the data distribution status in the table in the database, for example, a Bayesian graph or a histogram. This is not limited in the present invention. In this embodiment of this application, the histogram is used as an example for description.

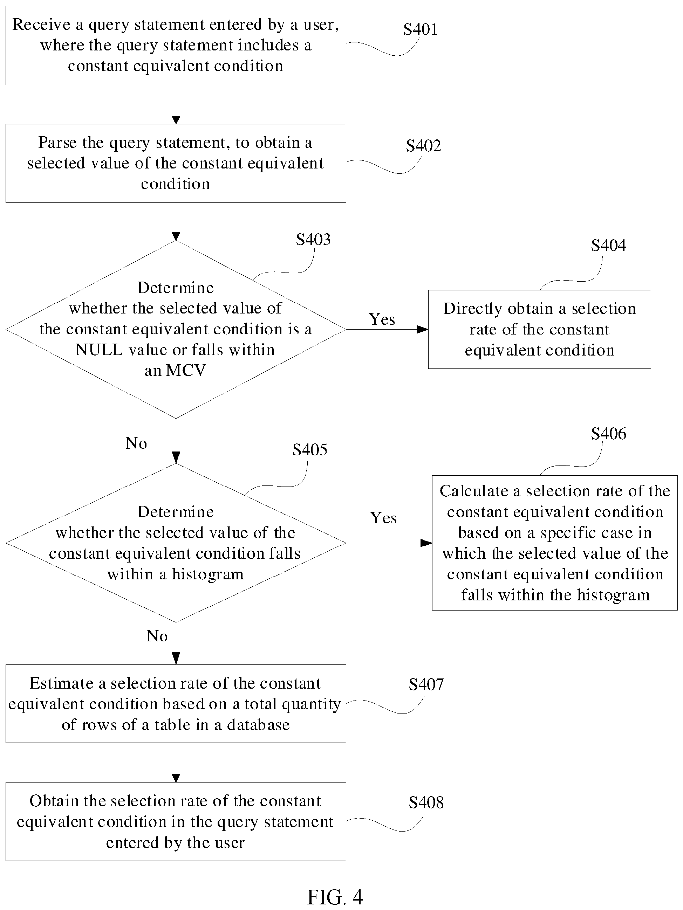

For example, FIG. 4 is a schematic flowchart of a selection rate estimation method. It can be learned from FIG. 4 that the method may be applied to the query optimization system shown in FIG. 1. The method includes S401 to S408.

S401: Receive a query statement entered by a user, where the query statement includes a constant equivalent condition.

In this embodiment, a query optimization system receives, by using a query module, the query statement entered by the user, where the query statement includes the equivalent condition, and a selected value of the equivalent condition is a constant (that is, the equivalent condition may also be referred to as the constant equivalent condition). In this embodiment of this application, equivalent conditions are all constant equivalent conditions.

In a possible example, the query statement entered by the user is "select * from t1 where a=150", where a=150 is a constant equivalent condition, and 150 is a constant (which may also be referred to as a selected value of the constant equivalent condition).

S402: Parse the query statement, to obtain the selected value of the constant equivalent condition.

In this embodiment, after receiving the query statement entered by the user, a parser parses the query statement entered by the user, for example, performs lexical parsing, syntax parsing, semantic analysis, and the like, to obtain a parsed statement. The statement obtained through parsing includes the constant in the constant equivalent condition.

S403: Determine whether the selected value of the constant equivalent condition is a NULL value or falls within an MCV; and when the constant is the NULL value or falls within the MCV, perform S404; otherwise, perform S405.

In this embodiment, after an optimizer receives the parsed query statement transferred by the parser, the optimizer selects a query plan based on the parsed query statement. Specifically, the optimizer may determine execution costs of different execution plans by calculating a selection rate of the constant equivalent condition in the received query statement. When determining the selection rate of the constant equivalent condition, the optimizer may first determine whether the selected value of the constant equivalent condition is the NULL value or falls within the MCV. When the selected value of the constant equivalent condition falls within the NULL value or the MCV, the optimizer may directly determine the selection rate of the constant equivalent condition based on a pre-collected proportion of the NULL value and a pre-collected frequency corresponding to the MCV (that is, the predetermined NULL value proportion and the predetermined frequency corresponding to the MCV are used as the selection rate of the equivalent condition).

In some embodiments, that the optimizer estimates the execution costs of the different execution plans may include scanning cost estimation, connection cost estimation, and non-SPJ cost estimation. The scanning cost estimation is used as an example. When the optimizer determines that a selection estimation rate of the equivalent condition of the query statement entered by the user is low, that is, the selected value of the equivalent condition of the query statement entered by the user appears in a corresponding table of a database less frequently, the selected value can be quickly found through index scanning, and a cost is lower. However, in sequential scanning, all data in the table needs to be traversed. This takes more time, that is, a cost is higher.

S404: Directly obtain the selection rate of the constant equivalent condition.

In this embodiment, when the optimizer determines that the constant in the query statement is the NULL value, the optimizer may obtain, based on pre-generated statistical information in the database, a selection rate obtained when the constant is the NULL value. When the optimizer determines that the constant in the query statement falls within the MCV, the optimizer may determine the selection rate of the constant equivalent condition in the query statement based on the frequency corresponding to the MCV in pre-generated statistical information.

In some embodiments, the database performs statistics collection in advance on data stored in the database, to obtain statistical information of the data. The statistical information of the data may include the proportion of the NULL value, a total quantity of distincts, a value in the MCV, the frequency corresponding to the MCV, and a histogram corresponding to the data. A basic principle of the histogram is to sort the data into several buckets (buckets), and record information such as a maximum value, a minimum value, and an occurrence frequency proportion of data in each bucket. Based on a data bucketing manner and data stored in a bucket, histograms may be classified into an equal-width histogram (equal-width histogram), an equal-height histogram (equal-height histogram), a compressed histogram (compressed histogram), and the like. When the database creates the histogram, a histogram type does not need to be specified. The database automatically selects, based on a relationship between a quantity (N) of buckets and a quantity of distinct values in column specification, a histogram type that needs to be used.

If the constant in the query statement entered by the user is the NULL value, the proportion corresponding to the NULL value can be used as the selection rate of the constant equivalent condition. When the constant in the query statement entered by the user falls within the MCV (that is, the constant in the query statement entered by the user is equal to the value in the MCV), the frequency corresponding to the MCV may be used as the selection rate of the constant equivalent condition.

S405: Determine whether the selected value of the constant equivalent condition falls within the histogram, and when the selected value falls within the histogram, perform S406; otherwise, perform S407.

In this embodiment, after the optimizer determines that the selected value of the constant equivalent condition in the query statement neither is the NULL value nor falls within the MCV, the optimizer does not directly make a uniform assumption on the queried data in the database to estimate the selection rate of the constant equivalent condition in the query statement. To fully consider a data distribution status in the database, when the optimizer determines that the selected value of the constant equivalent condition in the query statement neither is the NULL value nor falls within the MCV, the optimizer considers the data distribution status based on statistical information of the histogram of the data in the database and obtains the selection rate of the constant equivalent condition in the query statement.

S406: Calculate the selection rate of the constant equivalent condition based on a specific case in which the selected value of the constant equivalent condition falls within the histogram.

In this embodiment, after the optimizer determines that the constant in the query statement falls within the histogram, left and right boundaries of a bucket that is in the histogram and within which the constant falls further needs to be considered. In this embodiment of this application, the related histogram is an equal-height histogram.

In a possible example, when left and right boundary values of the bucket within which the constant in the query statement falls are equal, the optimizer determines a total quantity of buckets whose left and right boundary values are the same as the current left and right boundary values. Because buckets in the histogram are of a same height, frequencies other than frequencies of the MCV and the NULL value may be evenly allocated to each bucket. In this case, a frequency at which the constant appears in a base table may be calculated based on a total quantity of buckets whose left and right boundaries are the same as the left and right boundaries of the current bucket, and is used as a selection rate of the constant.

In another possible example, when the constant in the query statement falls within the histogram, and left and right boundary values of the bucket are unequal, interpolation needs to be performed on the histogram. Specifically, it is assumed that all constants in the histogram are evenly distributed, and occurrence frequencies of different constants are the same. In addition, because buckets in the histogram are of a same height, a quantity of distinct values allocated to the current bucket may be obtained based on the left and right boundaries of the bucket. That is, under the assumption of uniform distribution, a quantity of distinct values allocated to a wide range is larger, and a quantity of distinct values allocated to a narrow range is smaller. The frequencies other than the frequencies of the MCV and the NULL value are evenly allocated to each bucket, and then evenly allocated to the distinct value of the bucket. An estimated occurrence frequency of the constant value can be calculated, and the frequency is used as the selection rate of the constant equivalent condition.

S407: Estimate the selection rate of the constant equivalent condition based on a total quantity of rows of the table in the database.

In this embodiment, when determining that the constant in the query statement does not fall within the MCV and the histogram, the optimizer may determine that the current constant is a low-frequency value, that is, the constant appears less frequently. In this case, the optimizer can directly estimate the selection rate of the constant equivalent condition in the query statement based on the quantity of rows in the current base table.

S408: Obtain the selection rate of the constant equivalent condition in the query statement.

In this embodiment, an executor uses the obtained selection rate of the constant equivalent condition as the selection rate of the constant equivalent condition in the query statement. Then, the executor determines the query plan based on the selection rate corresponding to the constant equivalent condition, and delivers the determined query plan to an executor for execution.

In this embodiment of this application, when selection rate estimation is performed on the constant equivalent condition in the query statement entered by the user, it is first determined whether the selected value of the constant equivalent condition is the NULL value or falls within the MCV. When the selected value of the constant equivalent condition neither is the NULL value nor falls within the MCV, the data distribution status is considered based on the statistical information of the histogram and the selection rate of the constant equivalent condition is obtained. This ensures accuracy of the obtained selection rate of the constant equivalent condition, and also reduces a calculation amount of the optimizer. To be specific, in this embodiment of this application, the optimizer generates a better execution plan through lightweight calculation, so that performance of the optimizer is ensured, and the data distribution status is also fully considered (instead of directly making a uniform assumption for data that does not exist in the MCV). This improves accuracy of selection rate estimation.

It may be understood that sequence numbers of the steps do not mean execution sequences in the foregoing embodiments. The execution sequences of the processes should be determined according to functions and internal logic of the processes, and should not be construed as any limitation on the implementation processes of embodiments of this application. In addition, in some possible implementations, the steps in the foregoing embodiments may be selectively performed, or may be partially performed, or may be completely performed according to an actual situation. This is not limited herein. In addition, all or some of any features in the foregoing embodiments may be freely and randomly combined with each other in the case of no conflict. A combined technical solution also falls within the scope of this application.

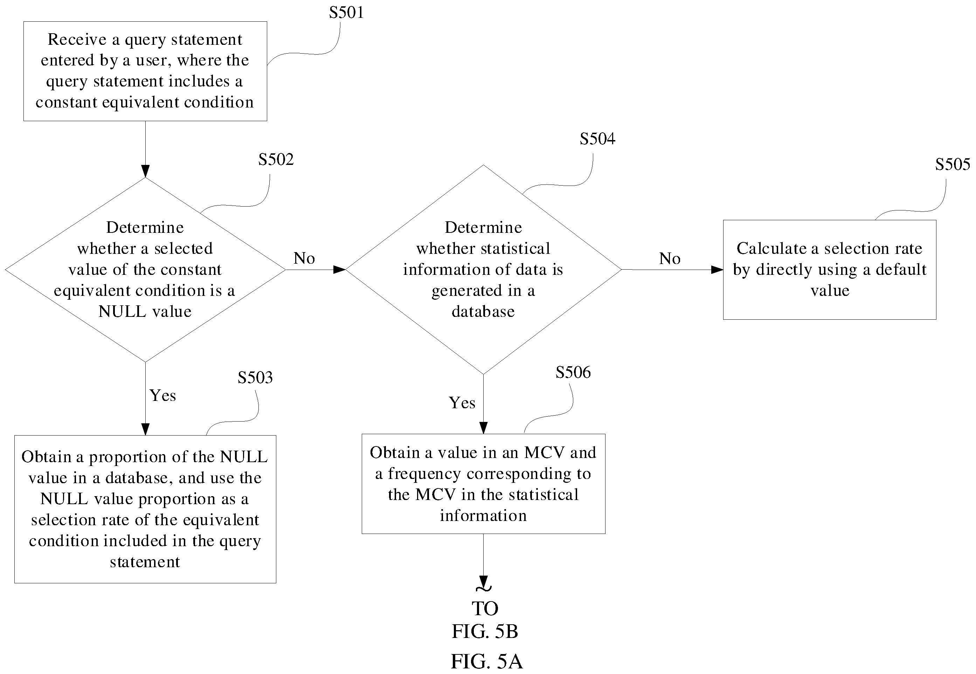

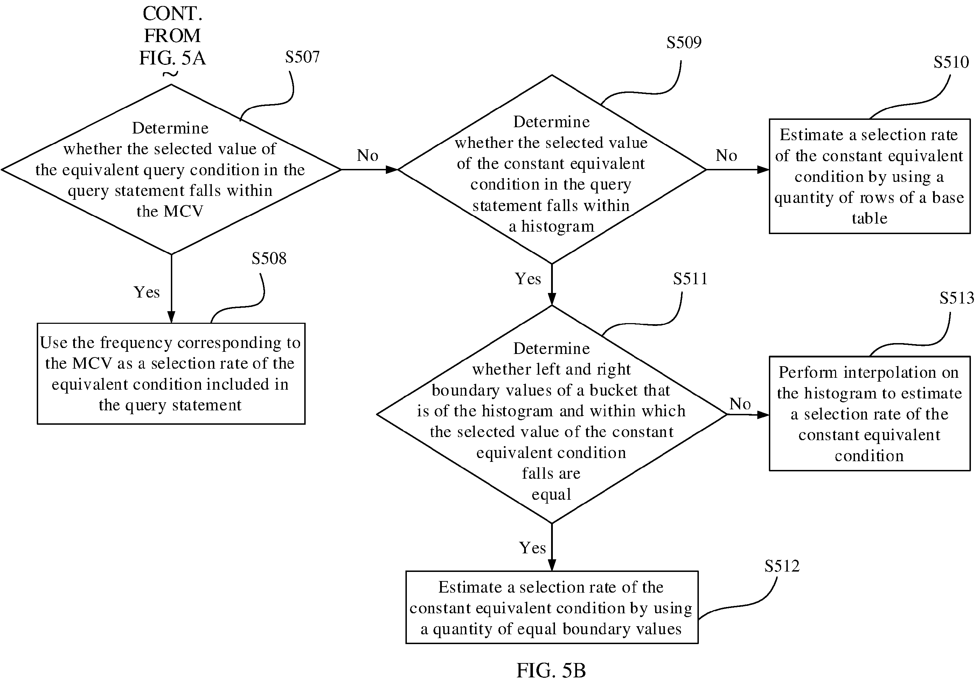

Next, the method shown in FIG. 4 is described in detail by using a specific embodiment. In this embodiment, a table t1 in a database is used as an example to describe a process of estimating selection rates of different selected values of a constant equivalent condition in a statement entered by a user. The table t1 includes two columns: a and b, and the two columns are of an integer type (INT). Data is inserted into the table t1. There are 300 rows of data whose a values are 101, 100 rows of data whose a values range from 1 to 100, 150,000 rows of data whose a values are 150, and one row of data whose a value is 200. For example, FIG. 5A and FIG. 5B are a schematic flowchart of a selection rate estimation method. It can be learned from FIG. 5A and FIG. 5B that the method includes S501 to S513.

S501: Receive a query statement entered by the user, where the query statement includes a constant equivalent condition.

In this embodiment, when data in the database is queried, a structured query language (structured query language, SQL) may be used for query. Specifically, when the SQL is used to query the data in the database, a select clause may be used for query. A select statement is used to specify column information in a queried table. A syntax of the select clause is as follows: select column name 1, column name 2...from table name [where substatement].

The where substatement is used for condition filtering. When the where substatement is used for condition filtering, an equivalent condition, a non-equivalent condition, and a fuzzy query are included. The equivalent condition is used for exact search/equivalent search (where column name=value). For example, select id, name from table where name='XX' is used to query information about a person whose name is XX. The non-equivalent condition uses "between...and..." to indicate a range, including a boundary. The fuzzy query is implemented by using like (like). For example, select id, name from table where name like 'X%' is used to query information about all persons whose surnames are X. When like is used to perform fuzzy query, a wildcard character is required. For example, "_" indicates any character, and "%" indicates any quantity of any characters. In this embodiment of this application, a problem of selection rate estimation of an equivalent condition is mainly concerned.

S502: Determine whether a selected value of the constant equivalent condition in the query statement is a NULL value, and when the selected value of the constant equivalent condition in the query statement is the NULL value, perform S503; otherwise, perform S504.

In this embodiment, after obtaining the query statement entered by the user, an optimizer may first determine whether the selected value of the constant equivalent condition in the query statement is the NULL value. When the selected value of the constant equivalent condition is the NULL value, a proportion of a NULL value in a corresponding base table may be obtained by querying, to determine a selection rate of the constant equivalent condition. If the selected value of the constant equivalent condition in the query statement is not the NULL value, the optimizer may consider another value of the constant equivalent condition.

S503: Obtain a proportion of the NULL value in the database, and use the NULL value proportion as the selection rate of the constant equivalent condition included in the query statement.

In this embodiment, when the selected value of the constant equivalent condition in the query statement entered by the user is the NULL value, the optimizer directly obtains the NULL value proportion in the corresponding queried base table, and the obtained NULL value proportion is used as the selection rate of the constant equivalent condition.

For example, for the table t1, when the query statement entered by the user is "select * from t1 where a=NULL", the optimizer obtains that a NULL value proportion of the table t1 is 0, that is, may determine that a selection rate of a is 0.

S504: Determine whether statistical information of data is generated in the database, and when the statistical information of the data is not generated in the database, perform S505; otherwise, perform S506.

In this embodiment, when the selected value of the constant equivalent condition in the query statement entered by the user is not the NULL value, the optimizer may sequentially consider several selected values of the constant equivalent condition. For example, whether the selected value falls within an MCV and whether the selected value falls within a histogram. Before different selected values of the constant equivalent condition in the query statement are considered, whether statistical information of the corresponding base table is generated in the database further needs to be determined. The statistical information generated by the database for the corresponding base table includes at least information such as the NULL value, a total quantity of distincts, a value in the MCV, a frequency corresponding to the MCV, and a histogram boundary. When the statistical information of the corresponding base table is not generated in the database, that is, an ANALYZE operation is not performed on the corresponding base table. In this case, the optimizer directly uses a default value preset in the database for estimation.

The database may alternatively generate the statistical information for the base table in the database in advance. The table t1 is used as an example. Statistical information generated by the database for the table t1 is shown in Table 1, and Table 1 is the statistical information of the table t1 in the database. The "frequency" in this embodiment of this application is a frequency at which data appears in the table t1.

**Table 1**

| | |
|---|---|
| NULL value proportion | 0 |
| Total quantity of distincts | 103 |
| Value in the MCV | 150 |
| Frequency corresponding to the MCV | 0.9369 |
| Histogram boundary | 1, 2, 3, 4, 5, 6, 7, 8, 9, 10, 11, 12, 13, 14, 15, 16, 17, 18, 19, 20, 21, 22, 23, 24, 25, 26, 28, 29, 30, 31, 32, 33, 34, 35, 36, 37, 38, 39, 40, 41, 42, 43, 44, 45, 46, 48, 49, 50, 51, 51, 52, 53, 54, 55, 56, 57, 58, 59, 60, 61, 62, 63, 64, 65, 66, 68, 69, 70, 71, 72, 73, 74, 75, 76, 77, 78, 79, 79, 80, 82, 83, 84, 85, 86, 88, 89, 90, 91, 92, 93, 94, 95, 96, 96, 97, 98, 99, 100, 101, 101, 101 |

When generating histograms for data stored in different databases, the databases predetermine a maximum quantity of buckets that can be included in the generated histograms. When generating a histogram, the database randomly samples data in a corresponding table (a table for which the histogram needs to be generated). In a random sampling process, it is impossible for the database to sample all data. That is, in an actual operation process, the histogram generated by the database has an error. The base table t1 is used as an example. A quantity of included buckets is preset to 100 when the database generates a histogram for the base table t1. In the base table t1, in addition to the value (150) in the MCV, the table t1 further includes 10301 rows. 10301 rows of data are sampled into the 100 buckets, and each bucket approximately includes 100 rows of data. In this way, the boundary of the histogram in Table 1 may be obtained.

It can be learned from Table 1 that the histogram corresponding to the base table t1 includes the 100 buckets (statistics collection does not need to be performed on the value in the MCV in the histogram). A first bucket [1, 2) includes 100 rows of data, and the 100 rows of data are all 1. A second bucket [2, 3) includes 100 rows of data, and the 100 rows of data are all 2. A 98^{th} bucket [100, 101) includes 100 rows of data, and the 100 rows of data are all 100. A 99^{th} bucket and a 100^{th} bucket are the same, that is, both are [101, 101), and each bucket includes 100 rows of data, and the 100 rows of data are all 101.

When generating the histogram for the base table t1, the database needs to sample 10,000 rows of data whose a values range from 1 to 100, 300 rows of data whose a values are 101, and one row of data whose a value is 200, namely, a total of 10,301 rows of data, into the 100 buckets. That is, theoretically, each bucket in the generated histogram includes 103.01 rows of data. However, because there is an error during actual sampling (for example, some data may not be sampled), that is, the generated histogram is not as normalized as theoretically, each bucket approximately includes 100 rows of data, and the buckets in the histogram are not completely equal in height (approximately equal in height). During actual sampling, due to a sampling error, a quantity of rows of data in some buckets may exceed 100 (for example, a bucket [28, 29)) in the histogram corresponding to the base table t1. During actual sampling, some data may not be sampled due to a low occurrence frequency. In this case, the data does not appear in the histogram, and some data may be repeatedly sampled. For example, in the histogram corresponding to the base table t1, because there is only one row of data whose a value is 200, in comparison with a quantity of rows of data whose a values range from 1 to 100 and a quantity of rows of data whose a values are 101, the data whose a value is 200 appears less frequently, and the data whose a value is 200 may not be sampled. For another example, there are the 100 rows of data whose a values are 101, and in the generated histogram, three buckets whose boundaries are [101, 101) are included in a pitch, and each bucket has 100 rows of data. However, during actual sampling, only two buckets may be sampled for data whose a values are 101. For another example, data whose a values are 51 is repeatedly sampled in an actual sampling process, and the histogram corresponding to the base table t1 includes two buckets: a bucket [51, 51) and a bucket [51, 22). However, due to a large amount of data in the database, an error that occurs in the actual sampling process does not greatly affect a final result.

In some embodiments, there is no sequence between S502 and S504. In an actual execution process, S504 may be performed first, and then S502 is performed. In an execution process, if S504 is performed before S502, an execution process between S502 and S504 is as follows. S504: Determine whether statistical information of data is generated in the database, and when the statistical information of the data is not generated in the database, perform S505; otherwise, perform S502. S502: Determine whether a constant included in the query statement is a NULL value; and when the constant included in the query statement is the NULL value, perform S503; otherwise, perform S506.

S505: Calculate the selection rate by directly using the default value.

In this embodiment, when the statistical information corresponding to the base table is not generated in the database, the optimizer may directly use the default value to calculate the selection rate of the constant equivalent condition. That is, the selection rate of the constant equivalent condition is calculated as follows: Selection rate of the constant equivalent condition=1/quantity of distinct values. Generally, a default value of a preset quantity of distincts in a database is related to a type of a constant. For example, a quantity of distinct values of a Boolean constant is 2.

S506: Obtain the value in the MCV and the frequency corresponding to the MCV in the statistical information.

In this embodiment, after the optimizer obtains the statistical information of the table t1 (including the statistical information such as the MCV and the histogram of the table t1), the optimizer may sequentially search for the MCV array and the frequency corresponding to the MCV in the statistical information of the table t1. To determine whether the selected value of the constant equivalent condition in the query statement falls within the MCV.

S507: Determine whether the selected value of the constant equivalent condition in the query statement falls within the MCV, and when the selected value of the constant equivalent condition in the query statement falls within the MCV, perform S508; otherwise, perform S509.

In this embodiment, after the optimizer obtains the value in the MCV of the table t1 and the frequency corresponding to the MCV by using the statistical information of the sequence table t1, the optimizer determines whether the selected value of the constant equivalent condition in the query statement is the same as the value in the MCV. When the selected value of the constant equivalent condition in the query statement is the same as the value in the MCV, the optimizer may use the frequency corresponding to the value in the MCV as an estimated selection rate value of the constant equivalent condition in the query statement.

For example, for the base table t1, when the query statement entered by the user is "select * from t1 where a=150", the optimizer traverses the MCV array in the statistical information of the base table t1, and determines that the selected value 150 of the constant equivalent condition in the query statement exists in the MCV array, and the frequency corresponding to the MCV is 0.9369. In this case, the optimizer may determine that a selection rate of a is 0.9369.

S508: Use the frequency corresponding to the MCV as the selection rate of the constant equivalent condition included in the query statement.

S509: Determine whether the selected value of the constant equivalent condition in the query statement falls within the histogram, and when the selected value does not fall within the histogram, perform S510; otherwise, perform S511.

In this embodiment, when the optimizer does not find, in the MCV array, the selected value of the constant equivalent condition in the query statement entered by the user, the optimizer needs to consider whether the selected value of the constant equivalent condition falls within the histogram corresponding to the base table t1.

In a possible example, when the optimizer searches for the histogram corresponding to the base table t1, the optimizer may perform a search in a binary search manner, or may perform a search in another manner.

S510: Estimate the selection rate of the constant equivalent condition by using a quantity of rows of the base table.

In this embodiment, when the optimizer determines, by searching the histogram corresponding to the base table t1, that the selected value of the constant equivalent condition in the query statement entered by the user does not fall within the histogram corresponding to the base table t1, the optimizer may determine that the selected value of the constant equivalent condition is a low-frequency value. That is, the selected value appears less frequently. In this case, the selection rate of the constant equivalent condition may be directly estimated based on the quantity of rows in the base table t1.

For example, for the base table t1, when the query statement entered by the user is "select * from t1 where a=200", a selected value 200 of the constant equivalent condition does not fall within the MCV of the base table t1, and does not fall within the bucket in the histogram corresponding to the base table t1. In this case, the optimizer may estimate a selection rate of a=200 by using the total quantity 160301 of rows in the base table t1. In this case, the selection rate of a=200 is 1/160301=6.2383-e.

S511: Determine whether left and right boundary values of a bucket that is of the histogram and within which the selected value of the constant equivalent condition falls are equal, and when the boundary values of the bucket are equal, perform S512; otherwise, perform S513.

In this embodiment, after the optimizer determines, through searching, that the selected value of the constant equivalent condition in the query statement entered by the user falls within the histogram corresponding to the base table t1, the optimizer further needs to determine left and right boundaries of the bucket that is of the histogram and within which the constant falls. Buckets in the histogram include an equal-boundary bucket and an unequal-boundary bucket.

S512: Estimate the constant selection rate by using a quantity of equal boundary values.

In this embodiment, when the optimizer determines that the left and right boundary values of the bucket that is of the histogram and within which the selected value of the constant equivalent condition in the query statement falls are the same, the optimizer determines a total quantity of buckets whose left and right boundary values are the same as those of the bucket within which the selected value of the constant equivalent condition falls. In this case, the optimizer may calculate, based on the total quantity of buckets whose left and right boundary values are the same as those of the bucket within which the selected value of the constant equivalent condition falls, a frequency at which the selected value of the constant equivalent condition appears in the base table t1, and use the frequency as the selection rate of the constant equivalent condition.

For example, for the base table t1, when the query condition entered by the user is "select * from t1 where a=101", the optimizer may obtain, by traversing the histogram, that a falls within the bucket [101, 101) of the histogram and there are two buckets that have the same left and right boundaries as the bucket [101, 101) in the histogram corresponding to the base table t1. Therefore, it may be determined that a selection rate of a is (1-0-0.9369)/100*2=3.9816e-7.

"1-0-0.9369" is a total probability occupied by all data in the histogram except a probability (0) occupied by the NULL value and a probability (0.9369) corresponding to the MCV in the base table. In this embodiment of this application, the histogram corresponding to the base table t1 is an equal-height histogram, that is, frequencies corresponding to all buckets in the histogram are the same. Therefore, it may be learned that a frequency of each bucket is "(1-0-0.9369)/100". In addition, in the histogram corresponding to the base table t1, there are the two buckets that are the same as the bucket [101, 101). Therefore, it may be determined that a frequency at which data in the bucket [101, 101) appears in the base table t1 is "(1-0-0.9369)/100*2".

S513: Perform interpolation on the histogram to estimate the selection rate of the constant equivalent condition.

In this embodiment, when the optimizer determines that the left and right boundary values of the bucket that is of the histogram and within which the selected value of the constant equivalent condition in the query statement falls are different, the optimizer may perform interpolation on the histogram, to determine a frequency of the bucket within which the selected value of the constant equivalent condition falls, and further determine the selection rate of the constant equivalent condition in the query statement.

Before interpolation is performed on the histogram, it is first assumed that all the data in the histogram is evenly distributed, and occurrence frequencies of different data are the same. In addition, because the buckets in the histogram are of the same height, a quantity of distinct values allocated to the bucket (a current bucket) within which the selected value of the constant equivalent condition falls can be determined based on the left and right boundaries of the bucket. That is, under the assumption of uniform distribution, a quantity of distinct values allocated to a wider range is larger, and a quantity of distinct values allocated to a narrower range is smaller. When calculating the frequency of the current bucket, the optimizer first evenly allocates frequencies other than frequencies of the MCV and the NULL value to each bucket in the histogram. Then, the optimizer allocates a frequency of each bucket to a distinct value of the bucket.

For example, for the base table t1, when the query condition entered by the user is "select * from t1 where a=11", the optimizer may obtain, by traversing the histogram, that a falls within a bucket [11, 12) of the histogram. Under the uniform assumption, a quantity of distinct values allocated to the bucket is 103/(101-1)x(12-11). In this case, the optimizer may determine that a selection rate of a is (1-0-0.9369)/100/(103/(101-1)*(12-11))=6.1262e-4.

"1-0-0.9369" is a total probability occupied by all data in the histogram except a probability (0) occupied by the NULL value and a probability (0.9369) corresponding to the MCV in the base table, and (12-11)/(101-1) is a proportion of the bucket within which a falls to all the buckets in the histogram. In this embodiment of this application, the histogram corresponding to the base table t1 is an equal-height histogram, that is, frequencies corresponding to all buckets in the histogram are the same. Therefore, it may be learned that a frequency of each bucket is "(1-0-0.9369)/100", and a quantity of distincts allocated to the bucket within which a falls is "103* (12-11)/(101-1)".

In this embodiment of this application, after the selection rate of the equivalent condition in the query statement entered by the user is determined, an execution plan of the query statement may be determined based on the determined selection rate of the equivalent condition. Before the query plan is determined, costs of various query plans are estimated, and a query plan with a lowest cost is selected as a finally executed query plan. For example, scanning cost estimation is calculated, and scanning includes index scanning and sequential scanning. When it is determined that the selection rate of the constant equivalent condition in the query statement entered by the user is low, index scanning instead of sequential scanning may be selected.

In a possible embodiment, when a table t2 is created in the database, the table t2 includes two columns: a column c and a column d. The column c and the column d are both of an integer type. 2000 rows of data whose c values are 200 is inserted into the table t2. An index index1 is created for the two columns (the column a and the column b) of the table t1, and an index index2 is created for the column c of the table t2.

When the query statement entered by the user is:
select a, b from t1,t2 where a=c and a=200//Select values of the column a and the column b from the tables t1 and t2, where the value of the column a is equal to a value of the column c, and the value of the column a is 200.

In this case, the optimizer may obtain, based on the query statement entered by the user, the following query plan for the query statement:

```
     Nested Loop (cost=0.00..58.27 rows=2000 width=8)
        -> Index Only Scan using index1 on t1 (cost=0.00..4.27 rows=1 width=8)
               Index Cond: (a=200)
        -> Seq Scan on t2 (cost=0.00..34.00 rows=2000 width=4)
               Filter: (c=200)
```

In the query plan, arrows and spaces indicate a hierarchy, index scanning is performed on the table t1, sequential scanning is performed on the table t2, and after the tables t1 and t2 are scanned, a join (join) operation is performed on the two tables. For the foregoing query, the optimizer estimates that quantities of rows in query results of the two tables differ greatly. Therefore, nested loop join (nestloop) is selected as the join operation.

It can be learned from the foregoing query plan that the optimizer estimates the selection rate of a=200 as 1/160301=6.2383e-6, and the selection rate is consistent with the selection estimation rate obtained in S509. The selection estimation rate of the selected value (200) of the constant equivalent condition in the query statement affects the overall query plan. Therefore, after determining the selection estimation rate of the constant equivalent condition in the query statement, the optimizer may determine, based on the determined selection estimation rate of the constant equivalent condition, the query plan that needs to be executed when the query statement entered by the user is executed. For example, when the optimizer determines that the selection estimation rate of the query equivalent condition entered by the user is low, the optimizer may select index scanning instead of another scanning manner such as sequential scanning.

In a possible example, the query statement entered by the user and the query plan obtained for the query statement are described by using the equivalent condition in the query statement entered by the user as a variable.

Before a query is performed based on the query statement entered by the user, a table required for the query needs to be created first, and an index required in a query process needs to be created, which specifically includes:
create table test1 (a int, b int);
create table test2 (a int, b int);
create index idx1 on test1(a);
create index idx2 on test2(a);

When the query statement entered by the user is:
select test1.a from test1,(select a from test2) tt where test1.a=tt.a and test1.b=1,
the optimizer may obtain, based on the query statement entered by the user, the following query plan for the query statement:

   ```
     Nested Loop
        -> Index Scan using idx1 on public.test1
             Output: test1.a, test1.b
             Filter: (test1.b=1)
        -> Index Only Scan using idx2 on public.test2
        Output: test2.a
        Index Cond: (test2.a=test1.a)
```

Herein, test1.a is a variable and is obtained through external input. **In** the query plan, arrows and spaces indicate a hierarchy, index scanning is performed on the tables test1 and test2, and after the tables t1 and t2 are scanned, a join (join) operation is performed on the two tables. For the foregoing query, nested loop join (nestloop) may be selected as the join operation.

In a possible example, when the equivalent condition in the query statement entered by the user is an expression, when a table required for a query is created and an index required in a query process is created, an expression index needs to be created, which specifically includes:
create table test1 (a int, b int);
create table test2 (a int, b int);
create index idx1 on test1((a+1));
create index idx2 on test2((a+1));

When the query statement entered by the user is:
select test1.a+1 from test1, tt where test1.a+1=tt.a+1 and test1.b=1,
the optimizer may obtain, based on the query statement entered by the user, the following query plan for the query statement:

   ```
     Nested Loop
        -> Index Scan using idx1 on public.test1
             Filter: (test1.b=1)
        -> Index Only Scan using idx2 on public.test2
        Index Cond: (test2.a+1=test1.a+1)
```

Herein, a+1 is an expression. In the query plan, arrows and spaces indicate a hierarchy, index scanning is performed on the tables test1 and test2, and after the tables t1 and t2 are scanned, a join (join) operation is performed on the two tables. For the foregoing query, nested loop join (nestloop) may be selected as the join operation.

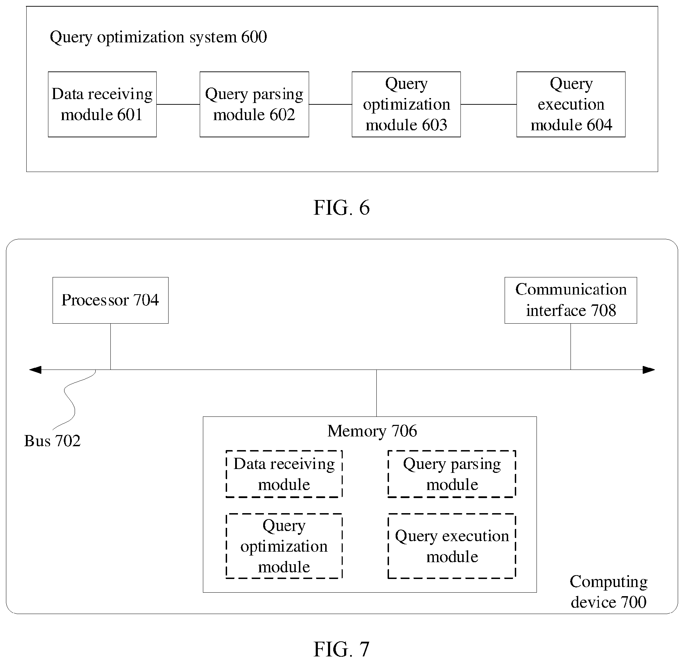

Based on the method in the foregoing embodiments, an embodiment of this application provides a selection rate estimation apparatus. Refer to FIG. 6. FIG. 6 is a diagram of a structure of a selection rate estimation apparatus according to an embodiment of this application. As shown in FIG. 16, a system 600 includes a data receiving module 601, a query parsing module 602, a query optimization module 603, and a query execution module 604.

The data receiving module 601 is configured to receive a query statement entered by a user.

The query parsing module 602 is configured to: parse the query statement entered by the user, and send a statement obtained through parsing to the query optimization module 603. When parsing the query statement entered by the user, the query parsing module 602 may perform lexical parsing, syntax parsing, and semantic analysis on the query statement.

The query optimization module 603 is configured to: determine a selection rate of a constant equivalent condition in the query statement based on the query statement entered by the user, and generate, based on the determined selection rate of the constant equivalent condition, a corresponding query plan for the query statement entered by the user. Specifically, the query optimization module 603 determines whether a selected value of the constant equivalent condition is a null value or whether a selected value of the constant equivalent condition falls within a most common value array. When the selected value of the constant equivalent condition is not the null value and does not fall within the most common value array, the query optimization module 603 determines the selection rate of the constant equivalent condition based on a histogram in a database.

The query execution module 604 is configured to execute the query plan generated by the query optimization module 603.

It should be understood that the foregoing apparatus is configured to perform the method in the foregoing embodiment. An implementation principle and technical effect of a corresponding program module in the apparatus are similar to those described in the foregoing method. For a working process of the apparatus, refer to a corresponding process in the foregoing method. Details are not described herein again.

For example, the apparatus embodiment described in FIG. 6 is merely an example. For example, division into modules is merely logical function division and may be other division during actual implementation. For example, a plurality of modules or components may be combined or integrated into another system, or some features may be ignored or not performed. Functional modules in embodiments of this application may be integrated into one processing module, or each module may exist alone physically, or two or more modules may be integrated into one module. The modules in FIG. 6 may be implemented in a form of hardware, or may be implemented in a form of software functional module. The modules in FIG. 6 may be separately implemented by components in the query system shown in FIG. 1. For example, the data receiving module 601 may be implemented by the querier 101. The query parsing module 602 may be implemented by the parser 102. The query optimization module 603 may be implemented by the optimizer 103. The query execution module 604 may be implemented by the executor 104. In some embodiments, all the modules in FIG. 6 may alternatively be implemented by the optimizer 103 in FIG. 1.

This application further provides a computing device 700. As shown in FIG. 7, the computing device 700 includes a bus 702, a processor 704, a memory 706, and a communication interface 708. The processor 704, the memory 706, and the communication interface 708 communicate with each other through the bus 702. The computing device 700 may be a server or a terminal device. It should be understood that quantities of processors and memories in the computing device 700 are not limited in this application.

The bus 702 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is indicated by using only one line in FIG. 7. However, it does not indicate that there is only one bus or only one type of bus. The bus 704 may include a path for transmitting information between components (for example, the memory 706, the processor 704, and the communication interface 708) of the computing device 700.

The processor 704 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 706 may include a volatile memory (volatile memory), for example, a random access memory (random access memory, RAM). The processor 704 may further include a non-volatile memory (non-volatile memory), for example, a read-only memory (read-only memory, ROM), a flash memory, a mechanical hard disk drive (hard disk drive, HDD), or a solid-state drive (solid-state drive, SSD).

The memory 706 stores executable program code, and the processor 704 executes the executable program code to separately implement functions of the data receiving module 601, the query parsing module 602, the query optimization module 603, and the query execution module 604, to implement the selection rate estimation method. In other words, the memory 706 stores instructions for performing the selection rate estimation method.

The communication interface 703 uses a transceiver module, for example, but not limited to, a network interface card or a transceiver, to implement communication between the computing device 700 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

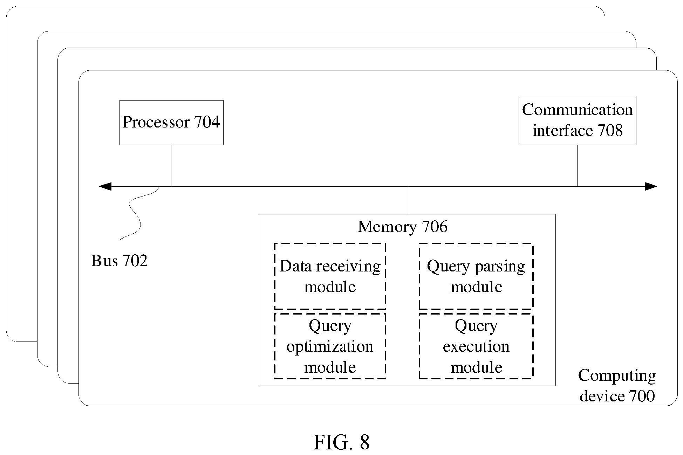

As shown in FIG. 8, the computing device cluster includes at least one computing device 700. A memory 706 in one or more computing devices 700 in the computing device cluster may store same instructions for performing the selection rate estimation method.

In some possible implementations, a memory 706 in one or more computing devices 700 in the computing device cluster may alternatively separately store some instructions for performing a digital human optimization method. In other words, a combination of one or more computing devices 700 may jointly execute instructions for performing the digital human optimization method.

It should be noted that memories 706 in different computing devices 700 in the computing device cluster may store different instructions for separately performing some functions of a digital human driving system. In other words, the instructions stored in the memories 706 in the different computing devices 700 may implement functions of one or more of the following modules: the data receiving module 601, the query parsing module 602, the query optimization module 603, and the query execution module 604.

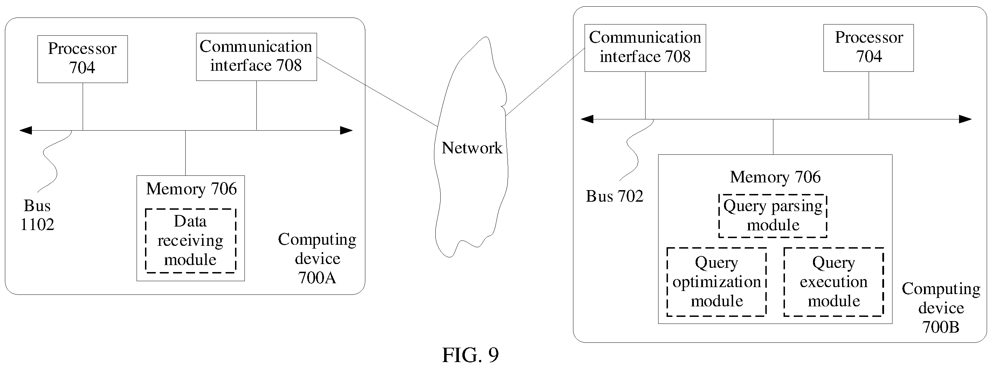

In some possible implementations, the one or more computing devices in the computing device cluster may be connected through a network. The network may be a wide area network, a local area network, or the like. FIG. 9 shows a possible implementation. As shown in FIG. 9, two computing devices 700A and 700B are connected through a network. Specifically, the computing devices are connected to the network through communication interfaces in the computing devices. In this possible implementation, a memory 706 in the computing device 700A stores instructions for performing the function of the data receiving module 601. In addition, a memory 706 in the computing device 700B stores instructions for performing functions of the query parsing module 602, the query optimization module 603, and the query execution module 604.

In a connection manner between computing device clusters shown in FIG. 9, it may be considered that a large amount of calculation needs to be performed in the selection rate estimation method provided in this application, and therefore, it is considered that the functions implemented by the query parsing module 602, the query optimization module 603, and the query execution module 604 are performed by the computing device 700B.

It should be understood that a function of the computing device 700A shown in FIG. 9 may alternatively be completed by a plurality of computing devices 700. Similarly, functions of the computing device 700B may alternatively be completed by a plurality of computing devices 700.

Based on the method in the foregoing embodiments, an embodiment of this application provides a computer-readable storage medium. The computer-readable storage medium stores a computer program. When the computer program is run on a processor, the processor is enabled to perform the method in the foregoing embodiments.

Based on the method in the foregoing embodiments, an embodiment of this application provides a computer-readable storage medium. The computer-readable storage medium stores a computer program. When the computer program is run on a processor, the processor is enabled to perform the method in the foregoing embodiments.

Based on the method in the foregoing embodiments, this application provides a chip, including at least one processor and an interface. The at least one processor obtains program instructions or data through the interface. The at least one processor is configured to execute the program instructions, to implement the method in the foregoing embodiments.

It may be understood that sequence numbers of the steps do not mean execution sequences in the foregoing embodiments. The execution sequences of the processes should be determined according to functions and internal logic of the processes, and should not be construed as any limitation on the implementation processes of embodiments of this application. In addition, in some possible implementations, the steps in the foregoing embodiments may be selectively performed, or may be partially performed, or may be completely performed according to an actual situation. This is not limited herein.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk, a CD-ROM, or any other form of storage medium well-known in the art. For example, a storage medium is coupled to a processor, so that the processor can read information from the storage medium and write information to the storage medium. Certainly, the storage medium may alternatively be a component of the processor. The processor and the storage medium may be disposed in an ASIC.

All or some of the foregoing embodiments may be implemented by software, hardware, firmware, or any combination thereof. When software is used to implement embodiments, all or some of the embodiments may be implemented in a form of computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit a scope of embodiments of this application.

## Claims

1. A selection rate estimation method, comprising:
obtaining a query statement entered by a user, wherein the query statement comprises an equivalent condition, and a selected value of the equivalent condition is a constant, a variable, or an expression;
determining whether the selected value of the equivalent condition is a null value or whether the selected value of the equivalent condition falls within a most common value array; and
when the selected value of the equivalent condition is not the null value and does not fall within the most common value array, determining a selection rate of the equivalent condition based on a statistical graph in a database, wherein the statistical graph is used to describe a data distribution status in a table in the database.

2. The method according to claim 1, wherein the method further comprises:
generating statistical information for the table in the database, wherein the statistical information comprises at least one of the following: a null value proportion, a total quantity of deduplicated distinct values, the most common value array, a frequency corresponding to the most common value array, and a histogram.

3. The method according to claim 2, wherein the statistical graph is a histogram, and the determining a selection rate of the equivalent condition based on a statistical graph in a database comprises:
if the selected value of the equivalent condition falls within the histogram, determining whether left and right boundaries of a bucket that is of the histogram and within which the selected value falls are the same; and
if the left and right boundaries of the bucket are the same, estimating the selection rate of the equivalent condition based on a quantity of buckets with equal boundaries in the histogram; or
if the left and right boundaries of the bucket are different, performing interpolation on the histogram to estimate the selection rate of the equivalent condition.

4. The method according to claim 3, wherein the method further comprises:
if the selected value of the equivalent condition does not fall within the histogram, estimating the selection rate of the equivalent condition based on a total quantity of rows of a queried table in the database.

5. The method according to any one of claims 2 to 4, wherein the histogram comprises any one of the following: an equal-width histogram, an equal-height histogram, and a compressed histogram.

6. The method according to any one of claims 1 to 5, wherein the method further comprises:
generating a query plan for the query statement based on the selection rate of the equivalent condition; and
executing the query plan.

7. A selection rate estimation apparatus, comprising:
a data receiving module, configured to receive a query statement entered by a user, wherein the query statement comprises an equivalent condition, and a selected value of the equivalent condition is a constant, a variable, or an expression; and
a query optimization module, configured to: determine whether the selected value of the equivalent condition is a null value or whether the selected value of the equivalent condition falls within a most common value array; and when the selected value of the equivalent condition is not the null value and does not fall within the most common value array, determine a selection rate of the equivalent condition based on a statistical graph in a database, wherein the statistical graph is used to describe a data distribution status in a table in the database.

8. The apparatus according to claim 7, wherein the query optimization module is further configured to:
generate statistical information for the table in the database, wherein the statistical information comprises at least one of the following: a null value proportion, a total quantity of deduplicated distinct values, the most common value array, a frequency corresponding to the most common value array, and a histogram.

9. The apparatus according to claim 7, wherein the statistical graph is a histogram, and the query optimization module is further configured to:
if the selected value of the equivalent condition falls within the histogram, determine whether left and right boundaries of a bucket that is of the histogram and within which the selected value falls are the same; and
if the left and right boundaries of the bucket are the same, estimate the selection rate of the equivalent condition based on a quantity of buckets with equal boundaries in the histogram; or
if the left and right boundaries of the bucket are different, perform interpolation on the histogram to estimate the selection rate of the equivalent condition.

10. The apparatus according to claim 9, wherein the query optimization module is further configured to:
if the selected value of the equivalent condition does not fall within the histogram, estimate the selection rate of the equivalent condition based on a total quantity of rows of a queried table in the database.

11. The apparatus according to any one of claims 6 to 10, wherein the histogram comprises any one of the following: an equal-width histogram, an equal-height histogram, and a compressed histogram.

12. The apparatus according to any one of claims 7 to 11, wherein the apparatus further comprises a query execution module;
the query optimization module is further configured to generate a query plan for the query statement based on the selection rate of the equivalent condition; and
the query execution module is configured to execute the query plan.

13. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 6.

14. A computer-readable storage medium, comprising computer program instructions, wherein when the computer program instructions are executed by a computing device cluster, the computing device cluster performs the method according to any one of claims 1 to 6.

15. A computer program product comprising instructions, wherein when the instructions are run by a computing device cluster, the computing device cluster is enabled to perform the method according to any one of claims 1 to 6.
